(19) Europäisches Patentamt
European Patent Office
Office européen des brevets

(11) EP 1 098 919 B1

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(21) Anmeldenummer: **99932814.9**

(22) Anmeldetag: **05.07.1999**

(51) Int Cl.[7]: **C08F 279/04**, C08L 55/02, C08L 25/12

(86) Internationale Anmeldenummer:
**PCT/EP1999/004652**

(87) Internationale Veröffentlichungsnummer:
**WO 2000/004068 (27.01.2000 Gazette 2000/04)**

(54) **THERMOPLASTISCHE FORMMASSEN AUF BASIS SPEZIELLER HOCHEFFEKTIVER PFROPFPOLYMERKOMPONENTEN**

THERMOPLASTIC MOULDING MATERIALS BASED ON SPECIAL HIGHLY EFFECTIVE GRAFTED POLYMER COMPONENTS

MATIERES MOULABLES THERMODURCISSABLES A BASE DE COMPOSANTS POLYMERE GREFFE A TRES HAUTE EFFICACITE

(84) Benannte Vertragsstaaten:
**BE DE ES FR GB IT NL**

(30) Priorität: **15.07.1998 DE 19831734**

(43) Veröffentlichungstag der Anmeldung:
**16.05.2001 Patentblatt 2001/20**

(73) Patentinhaber: **BAYER AG**
**51368 Leverkusen (DE)**

(72) Erfinder: **EICHENAUER, Herbert**
**D-41539 Dormagen (DE)**

(56) Entgegenhaltungen:
**EP-A- 0 678 531**
**GB-A- 1 255 797**
**US-A- 3 542 905**
**US-A- 5 298 563**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der Erfindung sind thermoplastische Formmassen vom ABS-Typ enthaltend spezielle hocheffektive Pfropfpolymerkomponenten, die durch Emulsionspolymerisation unter Verwendung spezieller Initiatorsysteme und Einhaltung definierter Reaktionsbedingungen erhalten werden.

Formmassen vom ABS-Typ sind Zweiphasenkunststoffe aus

I) einem thermoplastischen Copolymerisat aus Styrol und Acrylnitril, in dem das Styrol ganz oder teilweise durch α-Methylstyrol oder Methylmethacrylat ersetzt werden kann; dieses Copolymerisat, auch als SAN-Harz oder MatrixHarz bezeichnet, bildet die äußere Phase;

II) mindestens einem Pfropfpolymerisat, welches hergestellt worden ist durch Pfropfreaktion eines oder mehrerer der unter I genannten Monomeren auf Butadien-, Homo- oder -Copolymerisat ("Pfropfgrundlage"). Dieses Pfropfpolymerisat ("Elastomerphase" oder "Pfropfkautschuk" ) bildet die disperse Phase im Matrixharz.

Bei gleicher Matrix wird die Zähigkeit einer ABS-Formmasse im wesentlichen durch den Pfropfkautschuk bestimmt. Die mit üblichen ABS-Formmassen erreichbare Zähigkeit reicht jedoch für stark beanspruchte Formteile noch nicht immer mit der notwendigen Sicherheit aus, insbesondere dann, wenn auch sehr hohe Zähigkeiten bei tiefer Temperatur gefordert werden oder aber werden diese Anforderungen nur auf Kosten anderer ebenfalls benötigter Eigenschaften wie z.B. Härte oder Verarbeitungsverhalten erzielt.

Es besteht daher Bedarf an Pfropfpolymerisaten, auf deren Basis sich ABS-Formmassen mit sehr hohen Zähigkeitswerten bei Raumtemperatur und bei tiefer Temperatur herstellen lassen, ohne daß sich die übrigen Eigenschaften, insbesondere Härte und Verarbeitbarkeit, verschlechtem.

Außerdem sollten sich diese Pfropfkautschuke auch auf Basis feinerteiliger Kautschukgrundlagen herstellen lassen, damit bei Bedarf auch Formteile mit hohem Oberflächenglanz erhalten werden können.

Es wurde nun gefunden, daß Formmassen vom ABS-Typ mit ausgezeichneten Zähigkeiten bei Raumtemperatur und tiefer Temperatur ohne gravierende Einbußen bei den sonstigen Eigenschaften erhalten werden, wenn die Herstellung des eingesetzten Pfropfpolymerisats unter Verwendung spezieller Kombinationen von Initiatorsystemen und Einhaltung definierter Reaktionsbedingungen erfolgt.

Die Herstellung von Pfropfkautschuken unter Verwendung verschiedener Initiatorsysteme ist bekannt. So beschreiben zahlreiche Schriften wie z.B. auch die EP-A 154 244 die Verwendung von Kaliumpersulfat als Initiator.

Schriften wie z.B. die EP-A 745 623 ( siehe auch dort zitierte Literatur) beschreiben die Verwendung von speziellen Redox-Systemen oder von Azoinitiatoren.

Derartige Initiatorsysteme führen zwar zu Pfropfpolymerisaten, die in thermoplastischen Formmassen zu guten Eigenschaften bei speziellen Anforderungen führen, gute Zähigkeitswerte bei hohen und tiefen Temperaturen unter Erhalt der sonstigen Eigenschaften werden jedoch nicht im ausreichenden Maße erreicht.

Gegenstand der Erfindung sind thermoplastische Formmassen vom ABS-Typ enthaltend

A) mindestens ein durch radikalische Emulsionspolymerisation von harzbildendenVinylmonomeren, vorzugsweise von Styrol oder Acrylnitril, wobei Styrol und/oder Acrylnitril ganz oder teilweise ersetzt werden kann durch α-Methylstyrol, Methylmethacrylat oder N-Phenylmaleinimid, in Gegenwart von in Latexform vorliegendem Kautschuk mit einer Glasübergangstemperatur $\leq 0°C$ unter Verwendung einer Initiatorkombination aus einer speziellen Azoverbindung und einer Persulfatverbindung erhaltenes elastisch-thermoplastisches Pfropfpolymerisat und

B) mindestens ein Copolymerisat aus Styrol und Acrylnitril, wobei Styrol und/oder Acrylnitril ganz oder teilweise durch α-Methylstyrol oder Methylmethacrylat oder N-Phenylmaleinimid ersetzt werden kann,

dadurch gekennzeichnet, daß die Herstellung des Pfropfpolymerisats A) durch Zulauf der Monomeren zum Kautschuklatex erfolgt, zu Beginn der Pfropfpolymerisationsreaktion die spezielle Azoverbindung in Mengen von 0,2 bis 3 Gew.-%, vorzugsweise von 0,3 bis 2,5 Gew.-% und besonders bevorzugt von 0,5 bis 2 Gew.-% (jeweils bezogen auf die bis zum Zeitpunkt der Persulfatverbindungszugabe zudosierten Monomeren) zugesetzt wird, nach einem Monomerenzusatz von 10 bis 95 Gew.-%, vorzugsweise 20 bis 85 Gew.-%, besonders bevorzugt 20 bis 80 Gew.-%, insbesondere 30 bis 75 Gew.-% und ganz besonders bevorzugt 35 bis 70 Gew.-% (jeweils bezogen auf Gesamtmonomerenmenge) eine Persulfatverbindung in Mengen von 0,05 bis 1,5 Gew.-%, vorzugsweise von 0,08 bis 1,2 Gew.-% und besonders bevorzugt von 0,1 bis 1,0 Gew.-% (jeweils bezogen auf die ab dem Zeitpunkt der Persulfatverbindungszugabe zudosierten Monomeren) zugesetzt und die Polymerisation zu Ende geführt wird, wobei als Azoverbindung eine Verbindung der Formel (III)

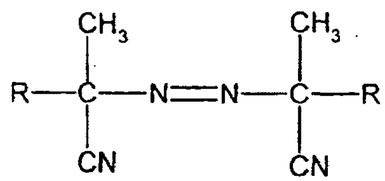

(III),

mit R = $CH_3$, $C_2H_5$, $C_3H_7$, $C_4H_9$,
wobei die isomeren Reste n- $C_3H_7$, i- $C_3H_7$, n- $C_4H_9$, i- $C_4H_9$, t- $C_4H_9$, eingeschossen sind
oder ein Gemisch davon eingesetzt wird.

Als Kautschuke zur Herstellung der erfindungsgemäßen elastisch-thermoplastischen Pfropfpolymerisate eignen sich im Prinzip alle in Emulsionsform vorliegenden kautschukartigen Polymerisate mit einer Glasübergangstemperatur unter 0°C.

Verwendet werden können z.B.

- Dienkautschuke, d.h. Homopolymerisate von konjugierten Dienen mit 4 bis 8 C-Atomen wie Butadien, Isopren, Chloropren oder deren Copolymerisate mit bis zu 60 Gew.-%, bevorzugt bis zu 30 Gew.-% eines Vinylmonomeren, z.B. Acrylnitril, Methacrylnitril, Styrol, α-Methylstyrol, Halogenstyrole, $C_1$-$C_4$-Alkylstyrole, $C_1$-$C_8$-Alkylacrylate, $C_1$-$C_8$-Alkylmethacrylate, Alkylenglykoldiacrylate, Alkylenglykoldimethacrylate, Divinylbenzol;

- Acrylatkautschuke, d.h. Homo- und Copolymerisate von $C_1$-$C_{10}$-Alkylacrylaten, z.B. Homopolymerisate von Ethylacrylat, Butylacrylat oder Copolymerisate mit bis zu 40 Gew.-%, bevorzugt nicht mehr als 10 Gew.-% Mono-Vinylmonomeren, z.B. Styrol, Acrylnitril, Vinylbutylether, Acrylsäure(ester), Methacrylsäure(ester), Vinylsulfonsäure. Bevorzugt werden solche Acrylatkautschukhomo- bzw. -copolymerisate eingesetzt, die 0,01 bis 8 Gew.-% Divinyl- oder Polyvinylverbindungen und/oder N-Methylolacrylamid bzw. N-Methylolmethacrylamid oder sonstige Verbindungen enthalten, die als Vernetzer wirken, z.B. Divinylbenzol, Triallylcyanurat.

Bevorzugt sind Polybutadienkautschuke, SBR-Kautschuke mit bis zu 30 Gew.-% einpolymerisiertem Styrol und Acrylatkautschuke, besonders solche, die eine Kern-Schalen-Struktur aufweisen, z.B. wie in DE-OS 3 006 804 beschrieben.

Zur Herstellung der erfindungsgemäßen Pfropfpolymerisate kommen Latices mit mittleren Teilchendurchmessern $d_{50}$ von 0,05 bis 2,0 µm, vorzugsweise von 0,08 bis 1,0 µm und besonders bevorzugt von 0,1 bis 0,5 µm, in Betracht. Die Gelgehalte der eingesetzten Kautschuke können in weiten Grenzen variiert werden, vorzugsweise liegen sie zwischen 30 und 95 Gew.-% (Bestimmung nach der Drahtkäfigmethode in Toluol (vgl. Houben-Weyl, Methoden der Organischen Chemie, Makromolekulare Stoffe, Teil 1, S.307 (1961), Thieme Verlag Stuttgart)).

Ganz besonders bevorzugt sind Mischungen von Kautschuklatices mit

a) mittleren Teilchendurchmessern $d_{50} \leq 320$ nm, vorzugsweise 260 bis 310 nm, und Gelgehalten ≤ 70 Gew.-%, vorzugsweise 40 bis 65 Gew.-% und

b) mittleren Teilchendurchmessern $d_{50} \geq 370$ nm, vorzugsweise 380 bis 450 nm, und Gelgehalten ≥ 70 Gew.-%, vorzugsweise 75 bis 90 Gew.-%.

Dabei hat der Kautschuklatex (a) vorzugsweise eine Breite der Teilchengrößenverteilung von 30 bis 100 nm, besonders bevorzugt von 40 bis 80 nm, der Kautschuklatex (b) von 50 bis 500 nm, besonders bevorzugt von 100 bis 400 nm (jeweils gemessen als $d_{90}$-$d_{10}$-Wert aus der integralen Teilchengrößenverteilung).

Die Mischungen enthalten die Kautschuklatices (a) und (b) vorzugsweise im Gewichtsverhältnis 90 : 10 bis 10 : 90, besonders bevorzugt 60 : 40 bis 30 :70 (jeweils bezogen auf den jeweiligen Feststoffanteil der Latices).

Die mittleren Teilchendurchmesser werden mittels Ultrazentrifuge (vgl. W. Scholtan, H. Lange : Kolloid-Z. u Z. Polymere 250, S. 782-796 (1972) bestimmt.

Die angegebenen Werte für den Gelgehalt beziehen sich auf die Bestimmung nach der Drahtkäfigmethode in Toluol (vgl. Houben- Weyl, Methoden der Organischen Chemie, Makromolekulare Stoffe, Teil 1, S. 307 (1961), Thieme Verlag Stuttgart).

Die verwendeten Kautschuklatices können durch Emulsionspolymerisation hergestellt werden, die erforderlichen Reaktionsbedingungen, Hilfsstoffe und Arbeitstechniken sind grundsätzlich bekannt.

Es ist auch möglich, nach bekannten Methoden zunächst ein feinteiliges Kautschukpolymerisat herzustellen und es anschließend in bekannter Weise zur Einstellung der erforderlichen Teilchengröße zu agglomerieren. Einschlägige Techniken sind beschrieben (vgl. EP-PS 0 029 613; EP-PS 0 007 810; DD-PS 144 415; DE-AS 12 33 131; DE-AS 12 58 076; DE-OS 21 01 650; US-PS 1 379 391).

Ebenfalls kann nach der sogenannten Saatpolymerisationstechnik gearbeitet werden, bei der zunächst z.B. ein feinteiliges Butadienpolymerisat hergestellt und dann durch Weiterumsatz mit Butadien enthaltenden Monomeren zu größeren Teilchen weiterpolymerisiert wird.

Als Emulgatoren können die üblichen anionischen Emulgatoren wie Alkylsulfate, Alkylsulfonate, Aralkylsulfonate, Seifen gesättigter oder ungesättigter Fettsäuren (z.B. Ölsäure, Stearinsäure) sowie alkalischer disproportionierter oder hydrierter Abietin- oder Tallölsäure verwendet werden, vorzugsweise werden Emulgatoren mit Carboxylgruppe (z.B. Salze von $C_{10}$-$C_{18}$-Fettsäuren, disproportionierte Abietinsäure) eingesetzt.

Prinzipiell kann man Kautschukpolymerisatlatices auch herstellen durch Emulgieren von fertigen Kautschukpolymerisaten in wäßrigen Medien (vgl. japanische Patentanmeldung 55 125 102).

Als Pfropfmonomere, die in Gegenwart der in Emulsionsform vorliegenden kautschukartigen Polymerisate polymerisiert werden, sind praktisch alle Verbindungen geeignet, die in Emulsion zu thermoplastischen Harzen polymerisiert werden können, z.B. Vinylaromaten der Formel (I) oder Verbindungen der Formel (II) bzw. deren Gemische,

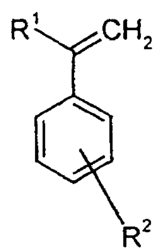

(I)

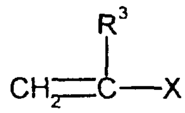

(II)

in welcher

R¹ Wasserstoff oder Methyl,

R² Wasserstoff, Halogen oder Alkyl mit 1 bis 4 Kohlenstoffatomen in ortho-, meta- oder para-Stellung,

R³ Wasserstoff oder Methyl und

X CN, $R^4OOC$ oder $R^5R^6NOC$- darstellt,

wobei

$R^4$ Wasserstoff oder Alkyl mit 1 bis 4 Kohlenstoffatomen und
$R^5$ und $R^6$ unabhängig voneinander Wasserstoff, Phenyl oder Alkyl mit 1 bis 4 Kohlenstoffatomen bedeuten.

Beispiele für Verbindungen der Formel (I) sind Styrol, α-Methylstyrol, p-Methylstyrol und Vinyltoluol. Beispiele für Verbindungen der Formel (II) sind Acrylnitril und Methylmethacrylat. Weitere geeignete Monomere sind z.B. Vinylacetat und N-Phenylmaleinimid.

Bevorzugte Monomere sind Mischungen aus Styrol und Acrylnitril, α-Methylstyrol und Acrylnitril, aus Styrol, Acrylnitril und Methylmethacrylat sowie Kombinationen dieser Monomerengemische mit N-Phenylmaleinimid.

Bevorzugte erfindungsgemäße Pfropf polymerisate A) sind solche, die durch Pfropfpolymerisation von Styrol und Acrylnitril im Gew.-Verhältnis 90 : 10 bis 50 : 50, vorzugsweise 80 : 20 bis 65 : 35(wobei Styrol ganz oder teilweise ersetzt werden kann durch α-Methylstyrol oder Methylmethacrylat) in Gegenwart von solchen Mengen Kautschuk, vorzugsweise Polybutadien, erhalten werden, daß Pfropfpolymerisate mit Kautschukgehalten von 20 bis 80 Gew.-%, vorzugsweise 30 bis 75 Gew.-% und besonders bevorzugt 35 bis 70 Gew.-% resultieren.

Die erfindungsgemäße Herstellung der Pfropfpolymerisate A) erfolgt dabei so, daß zu Beginn der Pfropfreaktion dem Kautschuklatex bzw. dem Kautschuklatexgemisch eine spezielle Azoverbindung zugesetzt wird.

Bevorzugt geeignete spezielle Azoverbindungen sind solche der allgemeinen Formel (III)

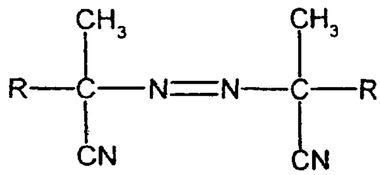

(III),

mit R = $CH_3$, $C_2H_5$, $C_3H_7$, $C_4H_9$,
wobei die isomeren Reste n- $C_3H_7$, i- $C_3H_7$, n- $C_4H_9$, i- $C_4H_9$, t- $C_4H_9$, eingeschlossen sind.

Besonders bevorzugt ist die Verbindung der Formel (III) mit R = $C_2H_5$.

Die Einsatzmengen an Azoverbindung betragen 0,2 bis 3 Gew.-%, vorzugsweise von 0,3 bis 2,5 Gew.-% und besonders bevorzugt von 0,5 bis 2 Gew.-% (jeweils bezogen auf die bis zum Zeitpunkt der Persulfatverbindungszugabe zudosierten Monomeren).

Anschließend werden die Pfropfmonomeren zudosiert und nach Erreichen einer Zugabemenge von 10 bis 95 Gew.-%, vorzugsweise 20 bis 85 Gew.-%, besonders bevorzugt 20 bis 80 Gew.-%, insbesondere 30 bis 75 Gew.-% und ganz besonders bevorzugt 35 bis 70 Gew.-% (jeweils bezogen auf Gesamtmonomerenmenge) wird mindestens eine Persulfatverbindung in Mengen von 0,05 bis 1,5 Gew.-%, vorzugsweise von 0,08 bis 1,2 Gew.-% und besonders bevorzugt von 0,1 bis 1,0 Gew.-% (jeweils bezogen auf die ab dem Startpunkt der Persulfatverbindungszugabe) zudosierten Monomeren zugesetzt.

Geeignete Persulfatverbindungen sind z.B. Natriumperoxodisulfat, Kaliumperoxodisulfat, Ammoniumperoxodisulfat, bevorzugte Persulfatverbindung ist Kaliumperoxodisulfat.

Üblicherweise werden sowohl die Azoverbindung als auch die Persulfatverbindung in Form wäßriger Lösungen, wäßriger Emulsionen, wäßriger Suspensionen oder sonstiger wäßriger Dispersionen eingesetzt.

Danach werden die restlichen Monomeren zudosiert und zu Ende polymerisiert.

Gegenstand der Erfindung ist weiterhin das Verfahren zur Herstellung von Pfropfkautschuken, wobei man

i) die Pfropfmonomeren zum Kautschuklatex dosiert,

ii) zu Beginn der Pfropfpolymerisationsreaktion die Azoverbindung in Mengen von 0,2 bis 3 Gew.-% (bezogen auf die bis zum Zeitpunkt der Persulfatverbindungszugabe zudosierten Monomeren) zusetzt

iii) nach einem Monomerenzusatz von 10 bis 95 Gew.-% (bezogen auf Gesamtmonomerenmenge) eine Persulfatverbindung in Mengen von 0,05 bis 1,5 Gew.-% (bezogen auf die ab dem Zeitpunkt der Persulfatverbindungszugabe zudosierten Monomeren) zusetzt und

iv) die Polymerisationsreaktion zu Ende führt,

wobei als Azoverbindung eine Verbindung der Formel (III)

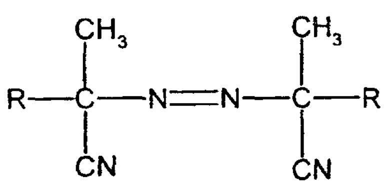

(III),

mit R = $CH_3$, $C_2H_5$, $C_3H_7$, $C_4H_9$,
wobei die isomeren Reste n- $C_3H_7$, i- $C_3H_7$, n- $C_4H_9$, i- $C_4H_9$, t- $C_4H_9$, eingeschlossen sind,
eingesetzt wird.

Die Reaktionstemperatur bei der erfindungsgemäßen Herstellung der Pfropfkautschuke A) kann in weiten Grenzen variiert werden. Sie ist 25°C bis 160°C, vorzugsweise 40°C bis 90°C; ganz besonders bevorzugt unterscheidet sich die Temperatur zu Beginn der Monomerendosierung von der Temperatur am Ende der Monomerendosierung um maximal 20°C, vorzugsweise maximal 10°C und besonders bevorzugt maximal 5°C.

Zusätzlich können bei der Pfropfpolymerisation Molekulargewichtsregler eingesetzt werden, vorzugsweise in

Mengen von 0,05 bis 2 Gew.-%, besonders bevorzugt in Mengen von 0,1 bis 1 Gew.-% (jeweils bezogen auf Gesamtmonomermenge).

Eine erfindungsgemäß bevorzugte Verfahrensweise ist der Zusatz von Molekulargewichtsreglem nur in dem Reaktionsabschnitt nach Zugabe der Persulfatverbindung und die Vermeidung jeglichen Reglerzusatzes im Reaktionsabschnitt vor der Zugabe der Persulfatverbindung.

Geeignete Molekulargewichtsregler sind beispielsweise n-Dodecylmercaptan, t-Dodecylmercaptan, dimeres α-Methylstyrol, Terpinolen sowie Mischungskombinationen aus diesen Verbindungen.

Als Emulgator bei der Pfropfpolymerisationsreaktion können die obengenannten Verbindungen eingesetzt werden, bevorzugt sind Emulgatoren mit Carboxylgruppen.

Die Aufarbeitung des Pfropfkautschuklatex A) erfolgt durch bekannte Verfahren, beispielsweise durch Sprühtrocknung oder durch Zusatz von Salzen und/oder Säuren, Waschen der Fällprodukte und Trocknung des Pulvers.

Als Vinylharze B) werden vorzugsweise Copolymerisate des Styrols und Acrylnitrils im Gewichtsverhältnis 90:10 bis 50:50 eingesetzt, wobei Styrol und/oder Acrylnitril ganz oder teilweise durch α-Methylstyrol und/oder Methylmethacrylat ersetzt sein kann; gegebenenfalls kann anteilmäßig bis zu 30 Gew.-% (bezogen auf Vinylharz) eines weiteren Monomeren aus der Reihe Maleinsäureanhydrid, Maleinsäureimid, N-(Cyclo)-Alkylmaleinimid, N-(Alkyl)-Phenylmaleinimid mitverwendet werden.

Die gewichtsmittleren Molekulargewichte ($\overline{M}_w$) dieser Harze lassen sich in weiten Grenzen variieren, vorzugsweise liegen sie zwischen ca. 40 000 und 200 000, besonders bevorzugt zwischen 50 000 und 150 000.

Einzelheiten zur Herstellung dieser Harze sind beispielsweise in der DE-AS 2 420 358 und der DE-AS 2 724 360 beschrieben. Durch Masse- bzw. Lösungspolymerisation sowie durch Suspensionspolymerisation hergestellte Harze haben sich besonders bewährt.

Der Anteil des elastisch-thermoplastischen Pfropfpolymerisats (A) an den erfindungsgemäßen Formmassen läßt sich in weiten Grenzen variieren; vorzugsweise beträgt er 10 bis 80 Gew.-%, besonders bevorzugt 20 bis 75 Gew.-%.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoff (Glasfasern, Kohlefasern etc.) und Farbmittel.

Die Endverformung kann auf handelsüblichen Verarbeitungsaggregaten vorgenommen werden und umfaßt z.B. Spritzgußverarbeitung, Plattenextrusion mit gegebenenfalls anschließender Warmverformung, Kaltverformung, Extrusion von Rohren und Profilen oder Kalander-Verarbeitung.

Die erfindungsgemäßen Formmassen vom ABS-Typ können mit anderen Polymeren vermischt werden. Geeignete Blendpartner sind beispielsweise ausgewählt aus mindestens einem Polymer, ausgewählt aus der Gruppe der Polycarbonate, Polyester, Polyestercarbonate und Polyamide.

Geeignete thermoplastische Polycarbonate und Polyestercarbonate sind bekannt (vgl: z.B. DE-AS 1 495 626, DE-OS 2 232 877, DE-OS 2 703 376, DE-OS 2 714 544, DE-OS 3 000 610, DE-OS 3 832 396, DE-OS 3 077 934), z. B. herstellbar durch Umsetzung von Diphenolen der Formeln (IV) und (V)

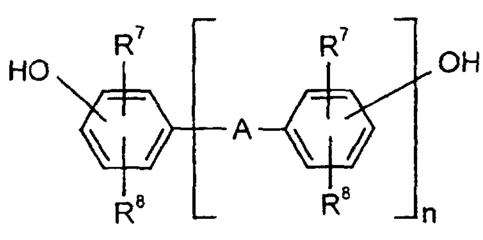

(IV)

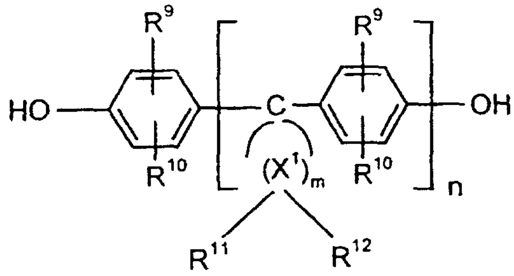

(V)

worin

| | |
|---|---|
| A | eine Einfachbindung, $C_1$-$C_5$-Alkylen, $C_2$-$C_5$-Alkyliden, $C_5$-$C_6$-Cycloalkyliden, -O-, -S-, -SO-, -$SO_2$- oder -CO- ist, |
| $R^7$ und $R^8$ | unabhängig voneinander für Wasserstoff, Methyl oder Halogen, insbesondere für Wasserstoff, Methyl, Chlor oder Brom stehen, |
| $R^9$ und $R^{10}$ | unabhängig voneinander Wasserstoff, Halogen bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten, |
| m | eine ganze Zahl von 4 bis 7, bevorzugt 4 oder 5 ist, |
| n | 0 oder 1 ist, |
| $R^{11}$ und $R^{12}$ | für jedes $X^1$ individuell wählbar sind und unabhängig voneinander Wasserstoff oder $C_1$-$C_6$-Alkyl bedeuten und |
| $X^1$ | Kohlenstoff bedeutet, |

mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (IV) und (V) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (IV) sind 2,2-Bis-(4-hydroxyphenyl)-propan und 1,1-Bis-(4-hydroxyphenyl)-cyclohexan, bevorzugtes Phenol der Formel (V) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (IV) und (V).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte ($\overline{M}_w$, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch-, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestem) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethy1,3,5,5,-trimethylcyclohexylamin, 2,5- und/oder 2,6-Bis-(aminomethyl)-norboman und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbomen; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus
70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und
gegebenenfalls entsprechend höher kondensierten Diaminen, die durch Hydrierungvon Diaminodiphenylmethan technischer Qualität erhalten werden. Die Isophthalsäure kann bis zu 30 % durch Terephthalsäure ersetzt sein.

Falls zusätzlich mindestens ein Polymer, ausgewählt aus der Gruppe der Polycarbonate, Polyester, Polyestercarbonate und Polyamide verwendet wird, beträgt dessen Menge bis zu 500 Gew.-Teile, vorzugsweise bis zu 400 Gew.-Teile und besonders bevorzugt bis zu 300 Gew.-Teile (jeweils bezogen auf 100 Gew.-Teile A + B).

In den folgenden Beispielen sind die angegebenen Teile immer Gewichtsteile und die angegebenen % immer Gew.-%, wenn nicht anders angegeben.

## Beispiele

Beispiel 1 (erfindungsgemäß)

50 Gew.-Teile (gerechnet als Feststoff) eines Polybutadienlatexgemisches (50 Gew.-% mit einem mittleren Teilchendurchmesser $d_{50}$ von 421 nm und einem Gelgehalt von 85 Gew.-% und 50 Gew.-% mit einem mittleren Teilchendurchmesser $d_{50}$ von 276 nm und einem Gelgehalt von 47 Gew.-%, beide hergestellt durch radikalische Polymerisation) werden mit Wasser auf einen Feststoffgehalt von ca. 20 Gew.-% gebracht, wonach auf 65°C erwärmt wird. Danach werden unter Rühren 0,25 Gew.-Teile der Verbindung der Formel (III) mit R = $C_2H_5$ (Vazo 67, DuPont Deutschland GmbH, Bad Homburg v.d.H.) zugesetzt.

Anschließend werden innerhalb 2h 25 Gew.-Teile eines Monomerengemisches aus 73 Gew.-% Styrol und 27 Gew.-% Acrylnitril und 0,075 Gew.-Teile tert.-Dodecylmercaptan gleichmäßig zudosiert.

Danach werden 0,25 Gew.-Teile Kaliumperoxodisulfat (gelöst in Wasser) zugegeben und anschließend werden innerhalb 2 h 25 Gew.-Teile eines Monomerengemisches aus 73 Gew.-% Styrol und 27 Gew.-% Acrylnitril und 0,075 Gew.-Teile tert.-Dodecylmercaptan gleichmäßig zudosiert.

Parallel zu den Monomeren wird 1 Gew.-Teil (gerechnet als Festsubstanz) des Natriumsalzes eines Harzsäuregemisches (Dresinate 731, Abieta Chemie GmbH, Gersthofen, gelöst in alkalisch eingestelltem Wasser) über 4 Stunden zudosiert.

Nach einer 4-stündigen Nachreaktionszeit wird der Pfropflatex nach Zugabe von ca. 1 Gew.-Teil eines phenolischen Antioxidans mit einem Magnesiumsulfat/Essigsäuregemisch koaguliert und nach dem Waschen mit Wasser das resultierende Pulver bei 70°C im Vakuum getrocknet.

40 Gew.-Teile dieses Pfropfpolymerisats werden mit 60 Gew.-Teilen eines Styrol/Acrylnitril-Copolymerharzes (72 : 28, $\overline{M}_w \approx 115\,000$, $\overline{M}_w / \overline{M}_n - 1 \leq 2$), 2 Gew.-Teilen Ethylendiaminbisstearylamid und 0,1 Gew.-Teilen eines Silikonöls in einem Innenkneter vermischt und anschließend zu Prüfkörpern verarbeitet.

**Folgende Daten wurden ermittelt:**

Kerbschlagzähigkeit bei Raumtemperatur ($a_k^{RT}$) und bei -40°C ($a_k^{-40°C}$) nach ISO 180/1 A (Einheit : kJ/m$^2$), Kugeldruckhärte ($H_c$) nach DIN 53 456 (Einheit : N/mm$^2$),
die Beurteilung der thermoplastischen Fließfähigkeit erfolgte durch Messung des notwendigen Fülldruckes bei 240°C (Einheit : bar) (siehe F. Johannaber, Kunststoffe 74 (1984), 1, Seiten 2-5),
der Rohton (Farbe im nichteingefärbten Zustand) wurde visuell nach den Abstufungen

++ sehr hell
\+ hell
o mittel
\- dunkel
\- - sehr dunkel

beurteilt.

Die Ergebnisse sind in Tabelle 1 zusammengestellt.

Beispiel 2 (erfindungsgemäß)

Beispiel 1 wird wiederholt, wobei nur nach dem Zusatz von Kaliumperoxodisulfat tert.-Dodecylmercaptan in einer Menge von 0,15 Gew.-Teilen zusammen mit den Monomeren zudosiert wird.

Beispiel 3 (Vergleich)

Beispiel 1 wird wiederholt, wobei anstelle der Zugabe von Verbindung der Formel (III) mit R = $C_2H_5$ nach dem Erwärmen des Kautschuklatexgemisches 0,25 Gew.-Teile Kaliumperoxodisulfat (gelöst in Wasser) zugegeben werden.

Beispiel 4 (Vergleich)

Beispiel 1 wird wiederholt, wobei nach dem Erwärmen des Kautschuklatexgemisches anstelle der Zugabe von Verbindung der Formel (III) mit R = $C_2H_5$ 0,25 Gew.-Teile Kaliumperoxodisulfat (gelöst in Wasser) zugegeben werden und nach 2-stündiger Monomerendosierung anstelle des Kaliumperoxodisulfatzusatzes 0,25 Gew.-Teile Verbindung der Formel (III) mit R = $C_2H_5$ zugegeben werden.

Beispiel 5 (erfindungsgemäß)

50 Gew.-Teile (gerechnet als Feststoff) eines durch radikalische Polymerisation hergestellten anionisch emulgierten Polybutadienlatex mit einem Teilchendurchmesser $d_{50}$ von 421 nm und einem Gelgehalt von 85 Gew.-% werden mit Wasser auf einen Feststoffgehalt von ca. 20 Gew.-% eingestellt und danach auf 65°C erwärmt.
Danach erfolgt die Pfropfreaktion analog zur Beschreibung in Beispiel 1.

Beispiel 6 (Vergleich)

Beispiel 5 wird wiederholt, wobei die in Beispiel 3 beschriebene Vorgehensweise angewandt wird.

Beispiel 7 (erfindungsgemäß)

50 Gew.-Teile (gerechnet als Feststoff) eines durch chemische Agglomeration aus einem Basislatex mit einem mittleren Teilchendurchmesser $d_{50}$ von 98 nm erhaltenen Kautschuklatex mit einem mittleren Teilchendurchmesser $d_{50}$ von 276 nm und einem Gelgehalt von 93 Gew.-% werden durch Zugabe von Wasser auf einen Feststoffgehalt von ca. 25 Gew.-% eingestellt und danach auf 63 °C erwärmt. Danach werden unter Rühren 0,3 Gew.-Teile der Verbindung der Formel (III) mit R = $CH_3$ (Vazo 64, DuPont) zugesetzt.
Anschließend werden innerhalb 1,5 h 30 Gew.-Teile eines Monomerengemisches aus 70 Gew.-% Styrol und 30 Gew.-% Acrylnitril und 0,2 Gew.-Teile tert.-Dodecylmercaptan gleichmäßig zudosiert.
Danach werden 0,25 Gew.-Teile Kaliumperoxodisulfat (gelöst in Wasser) zugegeben und anschließend werden innerhalb 1,5 h 20 Gew.-Teile eines Monomerengemisches aus 70 Gew.-% Styrol und 30 Gew.-% Acrylnitril und 0,3 Gew.-Teile tert.-Dodecylmercaptan gleichmäßig zudosiert.
Nach einer 3-stündigen Nachreaktionszeit wird der Pfropflatex nach Zugabe von ca. 1,5 Gew.-Teilen eines Antioxidans mit einem Magnesiumsulfat-Lösung koaguliert und nach dem Waschen mit Wasser das resultierende Pulver bei 70°C im Vakuum getrocknet.
40 Gew.-Teile dieses Pfropfpolymerisats werden mit 60 Gew.-Teilen eines Styrol/Acrylnitril-Copolymerharzes (72 : 28, $\overline{M}_w \approx 138\,000$), 1 Gew.-Teil Pentaerythrittetrastearat und 0,15 Gew.-Teilen eines Silikonöls in einem Innenkneter vermischt und anschließend zu Prüfkörpern verarbeitet.

Beispiel 8 (Vergleich)

Beispiel 7 wird wiederholt, wobei eine Vorgehensweise analog Beispiel 3 angewandt wird.
Aus den in Tabelle 1 zusammengestellten Prüfwerten ist ersichtlich, daß nur die erfindungsgemäßen Formmassen eine Steigerung der Zähigkeitswerte ohne negative Beeinflussung von Härte und Verarbeitbarkeit zeigen. Außerdem werden sehr gute Rohton-Werte erzielt.

Tabelle 1 :

| Prüfdaten der untersuchten Formmassen | | | | | |
|---|---|---|---|---|---|
| Beispiel | $a_k^{RT}$ (kJ/m²) | $a_k^{-40°C}$ (kJ/m²) | $H_c$ (N/mm²) | Fülldruck (bar) | Rohton |
| 1 | 42 | 26 | 91 | 158 | ++ |
| 2 | 43 | 26 | 91 | 152 | ++ |
| 3 (Vergleich) | 35 | 26 | 92 | 148 | - |
| 4 (Vergleich) | 36 | 27 | 90 | 154 | O |
| 5 | 47 | 28 | 93 | 152 | ++ |
| 6 (Vergleich) | 43 | 25 | 93 | 150 | - |
| 7 | 37 | 12 | 94 | 200 | ++ |
| 8 (Vergleich) | 30 | 11 | 92 | 198 | - |

**Patentansprüche**

1. Thermoplastische Formmassen vom ABS-Typ enthaltend

    A) mindestens ein durch radikalische Emulsionspolymerisation von harzbildenden Vinylmonomeren in Gegenwart von in Latexform vorliegendem Kautschuk mit einer Glasübergangstemperatur ≤0°C unter Verwendung einer Initiatorkombination aus einer speziellen Azoverbindung und einer Persulfatverbindung erhaltenes elastischthermoplastisches Pfropfpolymerisat und

    B) mindestens ein Copolymerisat aufgebaut aus Styrol und Acrylnitril und gegebenenfalls weiteren Comonomeren,

    **dadurch gekennzeichnet, daß** die Herstellung des Pfropfpolymerisats A) durch Zulauf der Monomeren zum Kautschuklatex erfolgt, zu Beginn der Pfropfpolymerisationsreaktion die spezielle Azoverbindung in Mengen von 0,2 bis 3 Gew.-% (bezogen auf die bis zum Zeitpunkt der Persulfatverbindungszugabe zudosierten Monomeren) zugesetzt werden, nach einem Monomerenzusatz von 10 bis 95 Gew.-% (bezogen auf Gesamtmonomerenmenge) eine Persulfatverbindung in Mengen von 0,05 bis 1,5 Gew.-% (bezogen auf die ab dem Zeitpunkt der Persulfatverbindungszugabe zudosierten Monomeren) zugesetzt und die Polymerisation zu Ende geführt wird, wobei als Azoverbindung eine Verbindung der Formel (III

    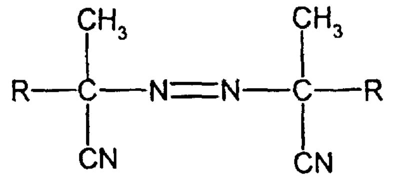

    (III),

    mit R = $CH_3$, $C_2H_5$, $C_3H_7$, $C_4H_9$,
    wobei die isomeren-Reste n- $C_3H_7$, i- $C_3H_7$, n- $C_4H_9$, i- $C_4H_9$, t- $C_4H_9$, eingeschlossen sind,
    oder ein Gemisch davon eingesetzt wird.

2. Thermoplastische Formmassen gemäß Anspruch 1, **dadurch gekennzeichnet, daß** die Komponente A) in Mengen von 10 bis 80 Gew.-% enthalten ist.

3. Thermoplastische Formmassen gemäß Anspruch 1, **dadurch gekennzeichnet, daß** der Kautschuk gemäß Komponente A ein Gemisch aus mindestens zwei Kautschuklatices mit

    a) einem mittleren Teilchendurchmesser $d_{50}$ ≤ 320 nm und einem Gelgehalt ≤ 70 Gew.-% und

b) einem mittleren Teilchendurchmesser $d_{50} \geq 370$ nm und einem Gelgehalt ≥ 70 Gew.-%

ist.

**4.** Thermoplastische Formmassen gemäß Anspruch 1, **dadurch gekennzeichnet, daß** das elastisch-thermoplastische Pfropfpolymerisat A) einen Kautschukgehalt von 20 bis 80 Gew.-% hat.

**5.** Thermoplastische Formmassen gemäß Anspruch 1, **dadurch gekennzeichnet, daß** die harzbildenden Monomere bei der Herstellung des Pfropfpolymerisats A) Styrol und Acrylnitril sind.

**6.** Thermoplastische Formmassen gemäß Anspruch 1, **dadurch gekennzeichnet, daß** bei der Herstellung des Pfropfpolymerisats A) die Polymerisation vor Zugabe der Persulfatverbindung ohne Zugabe von Molekulargewichtsregler erfolgt und die Polymerisation nach Zugabe der Persulfatverbindung unter Zugabe von Molekulargewichtsregler erfolgt.

**7.** Thermoplastische Formmassen gemäß Anspruch 1, **dadurch gekennzeichnet, daß** als Azoverbindung zur Herstellung des Pfropfpolymerisats A) die Verbindung

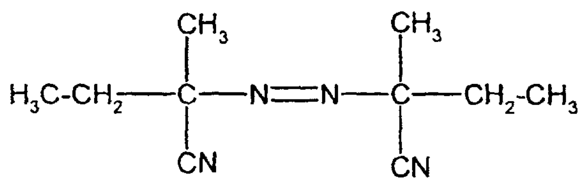

eingesetzt wird.

**8.** Thermoplastische Formmassen gemäß Anspruch 1, **dadurch gekennzeichnet, daß** als Persulfatverbindung zur Herstellung des Pfropfpolymerisats A) Kaliumperoxodisulfat verwendet wird.

**9.** Thermoplastische Formmassen gemäß Anspruch 1, **dadurch gekennzeichnet, daß** das Copolymerisat B) aufgebaut ist aus Monomeren ausgewählt aus Styrol, α-Methylstyrol, Acrylnitril, Methylmethacrylat, Maleinsäureanhydrid, N-Phenylmaleinimid oder Mischungen daraus.

**10.** Thermoplastische Formmassen nach Anspruch 1, enthaltend zusätzlich mindestens ein Harz ausgewählt aus der Gruppe der Polycarbonate, Polyestercarbonate, Polyester und Polyamide.

**11.** Verfahren zur Herstellung von kautschukhaltigen Pfropfpolymerisaten durch Emulsionspolymerisation unter Verwendung einer Initiatorkombination aus einer Azoverbindung und einer Persulfatverbindung, wobei man

i) die Pfropfmonomeren zum Kautschuklatex dosiert,

ii) zu Beginn der Pfropfpolymerisationsreaktion die Azoverbindung in Mengen von 0,2 bis 3 Gew.-% (bezogen auf die bis zum Zeitpunkt der Persulfatverbindungszugabe zudosierten Monomeren) zusetzt,

iii) nach einem Monomerenzusatz von 10 bis 95 Gew.-% (bezogen auf Gesamtmonomerenmenge) eine Persulfatverbindung in Mengen von 0,05 bis 1,5 Gew.-% (bezogen auf die ab dem Zeitpunkt der Persulfatverbindungszugabe zudosierten Monomeren) zusetzt und

iv) die Polymerisationsreaktion zu Ende führt,

wobei als Azoverbindung eine Verbindung der Formel (III)

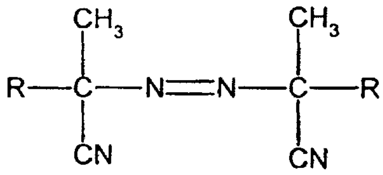

(III),

in welcher
R für $CH_3$, $C_2H_5$, $C_3H_7$, $C_4H_9$ und deren isomere Reste steht,
eingesetzt wird.

**12.** Verfahren gemäß Anspruch 11, wobei als Azoverbindung die folgende Verbindung

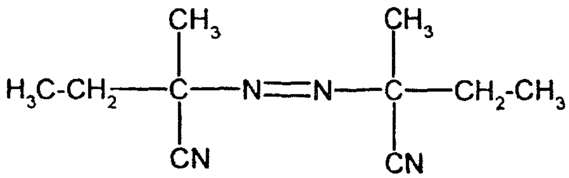

eingesetzt wird.

**13.** Verwendung der thermoplastischen Formmassen gemäß den Ansprüchen 1 bis 10 zur Herstellung von Formteilen.

**14.** Formteile, hergestellt aus thermoplastischen Formmassen gemäß den Ansprüchen 1 bis 10.

**Claims**

**1.** Thermoplastic moulding compositions of the ABS type containing

A) at least one elastic-thermoplastic graft polymer obtained by radical emulsion polymerization of resin-forming vinyl monomers in the presence of rubber present in latex form with a glass transition temperature ≤ 0°C using an initiator combination comprising a specific azo compound and a persulfate compound and

B) at least one copolymer comprising styrene and acrylonitrile and optionally further co-monomers,

**characterized in that** the graft polymer A) is produced by feed of the monomers to the rubber latex, at the start of the graft polymerization reaction the specific azo compound is added in quantities of 0.2 to 3 wt.% (related to the monomers metered in up to the time of the persulfate compound addition), after a monomer addition of 10 to 95 wt.% (related to total monomer quantity) a persulfate compound is added in quantities of 0.05 to 1.5 wt.% (related to the monomers metered in from the time of the persulfate compound addition) and the polymerization is brought to an end, wherein a compound of formula (III)

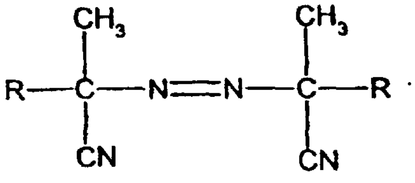

(III),

where R = $CH_3$, $C_2H_5$, $C_3H_7$, $C_4H_9$,
wherein the isomer groups n- $C_3H_7$, i- $C_3H_7$, n- $C_4H_9$, i-$C_4H_9$, t- $C_4H_9$ are included,
or a mixture thereof is used as azo compound.

2. Thermoplastic moulding compositions according to Claim 1, **characterized in that** component A) is contained in quantities of 10 to 80 wt.%.

3. Thermoplastic moulding compositions according to Claim 1, **characterized in that** the rubber according to Component A is a mixture of at least two rubber latices with

a) an average particle diameter $d_{50} \leq 320$ nm and a gel content ≤ 70 wt.% and

b) an average particle diameter $d_{50} \geq 370$ nm and a gel content ≥ 70 wt.%.

4. Thermoplastic moulding compositions according to Claim 1, **characterized in that** the elastic-thermoplastic graft polymer A) has a rubber content of 20 to 80 wt.%.

5. Thermoplastic moulding compositions according to Claim 1, **characterized in that** the resin-forming monomers in the production of the graft polymer A) are styrene and acrylonitrile.

6. Thermoplastic moulding compositions according to Claim 1, **characterized in that** in the production of the graft polymer A), polymerization takes place before addition of the persulfate compound with no addition of molecular weight regulators and polymerization takes place after addition of the persulfate compound with addition of molecular weight regulators.

7. Thermoplastic moulding compositions according to Claim 1, **characterized in that** the compound

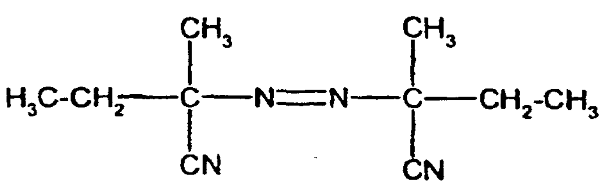

is used as azo compound to produce the graft polymer A).

8. Thermoplastic moulding compositions according to Claim 1, **characterized in that** potassium peroxodisulfate is used as persulfate compound for the production of the graft polymer A).

9. Thermoplastic moulding compositions according to Claim 1, **characterized in that** the co-polymer B) is composed of monomers selected from styrene, α-methylstyrene, acrylonitrile, methyl methacrylate, maleic anhydride, N-phenylmaleinimide or mixtures thereof.

10. Thermoplastic moulding compositions according to Claim 1, additionally containing at least one resin selected from the polycarbonates, polyester carbonates, polyesters and polyamides group.

11. Process for producing rubber-containing graft polymers by emulsion polymerization using an initiator combination comprising an azo compound and a persulfate compound, wherein

i) the graft monomers are metered into the rubber latex,

ii) the azo compound is added at the start of the graft polymerization reaction in quantities of 0.2 to 3 wt.% (related to the monomers metered in up to the time of the persulfate compound addition),

iii) after a monomer addition of 10 to 95 wt.% (related to the total monomer quantity) a persulfate compound is added in quantities of 0.05 to 1.5 wt.% (related to the monomers metered in from the time of the persulfate compound addition) and

iv) the polymerization reaction is brought to an end,

wherein a compound of formula (III)

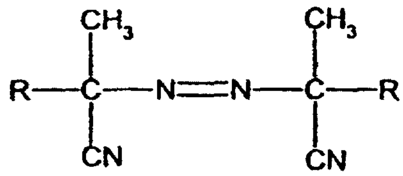

(III),

in which
R stands for $CH_3$, $C_2H_5$, $C_3H_7$, $C_4H_9$ and their isomer groups,
is used as azo compound.

**12.** Process according to Claim 11, wherein the following compound

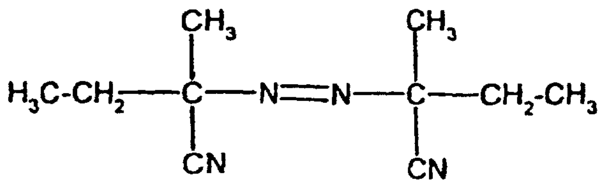

is used as azo compound.

**13.** Use of the thermoplastic moulding compositions according to Claims 1 to 10 to produce moulded parts.

**14.** Moulded parts, produced from thermoplastic moulding compositions according to Claims 1 to 10.

**Revendications**

**1.** Matières à mouler thermoplastiques du type ABS contenant

A) au moins un polymère greffé élastique-thermoplastique obtenu par polymérisation radicalaire en émulsion de monomères vinyliques formant des résines en présence d'un caoutchouc ayant une température de transition du second ordre inférieure ou égale à 0°C à l'état de latex à l'aide d'une combinaison d'inducteurs consistant en un composé azoïque particulier et un persulfate, et
B) au moins un copolymère constitué du styrène et de l'acrylonitrile et le cas échéant d'autres comonomères,

**caractérisées en ce que** le polymère greffé A) est préparé par addition des monomères au latex de caoutchouc, addition, au début de la réaction de polymérisation greffée, du composé azoïque particulier en quantité de 0,2 à 3 % en poids (par rapport aux monomères introduits avant le début de l'addition du persulfate), addition, après avoir ajouté 10 à 95 % en poids (par rapport aux monomères totaux) des monomères, d'un persulfate en quantité de 0,05 à 1,5 % en poids (par rapport aux monomères introduits à partir du début de l'addition du persulfate) et achèvement de la polymérisation, le composé azoïque consistant en un composé de formule (III)

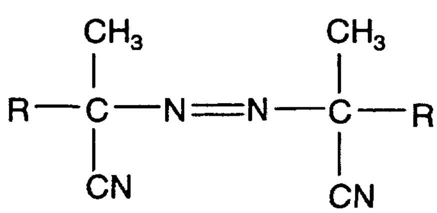

(III),

dans laquelle R = $CH_3$, $C_2H_5$, $C_3H_7$, $C_4H_9$,
y compris les formes isomères n-$C_3H_7$, i-$C_3H_7$, n-$C_4H_9$, i-$C_4H_9$, t-$C_4H_9$,

ou en un mélange de tels composés

2. Matières à mouler thermoplastiques selon la revendication 1, **caractérisées en ce que** le composant A) est contenu en quantité de 10 à 80 % en poids.

3. Matières à mouler thermoplastiques selon la revendication 1, **caractérisées en ce que** le caoutchouc du composant A) consiste en un mélange d'au moins deux latex de caoutchouc, respectivement.

   c) à un diamètre de particule moyen $d_{50} \leq 320$ nm et une teneur en gel $\leq 70$ % en poids et
   d) à un diamètre de particule moyen $d_{50} \geq 370$ nm et une teneur en gel $\geq 70$ % en poids.

4. Matières à mouler thermoplastiques selon la revendication 1, **caractérisées en ce que** le polymère greffé élastique-thermoplastique A) est à une teneur en caoutchouc de 20 à 80 % en poids.

5. Matières à mouler thermoplastiques selon la revendication 1, **caractérisées en ce que** les monomères formant des résines utilisés à la préparation du polymère greffé A) sont le styrène et l'acrylonitrile.

6. Matières à mouler thermoplastiques selon la revendication 1, **caractérisées en ce que**, à la préparation du polymère greffé A), la polymérisation est réalisée en l'absence de régulateurs de poids moléculaire avant l'addition du persulfate et en présence d'un régulateur de poids moléculaire après addition du persulfate.

7. Matières à mouler thermoplastiques selon la revendication 1, **caractérisées en ce que** le composé azoïque servant à la préparation du polymère greffé A) est le composé

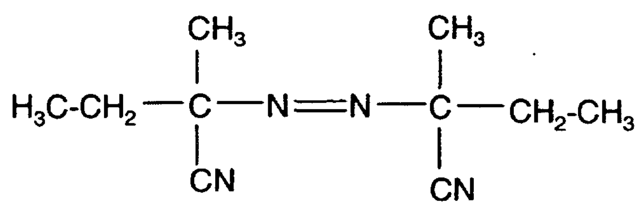

8. Matières à mouler thermoplastiques selon la revendication 1, **caractérisées en ce que** le persulfate servant à la préparation du polymère greffé A) est le peroxodisulfate de potassium.

9. Matières à mouler thermoplastiques selon la revendication 1, **caractérisées en ce que** le copolymère B) est constitué de monomères choisi parmi le styrène, l'$\alpha$-méthylstyrène, l'acrylonitrile, le méthacrylate de méthyle, l'anhydride maléique, le N-phénylmaléimide et leurs mélanges.

10. Matières à mouler thermoplastiques selon la revendication 1 contenant en outre au moins une résine choisie dans le groupe des polycarbonates, des polyestercarbonates, des polyesters et des polyamides.

11. Procédé pour la préparation de polymères greffés contenant un caoutchouc par polymérisation en émulsion à l'aide d'une combinaison d'inducteurs consistant en un composé azoïque et un persulfate, dans lequel

   i) on ajoute les monomères à greffer au latex de caoutchouc,
   ii) au début de la réaction de polymérisation greffée, on ajoute le composé azoïque en quantité de 0,2 à 3 % en poids (par rapport aux monomères introduits avant le début de l'addition du persulfate),
   iii) après avoir ajouté 10 à 95 % en poids des monomères (par rapport aux monomères totaux), on ajoute un persulfate en quantité de 0,05 à 1,5 % en poids (par rapport aux monomères introduits à partir du début de l'addition du persulfate) et
   iv) on achève la polymérisation,

   et le composé azoïque utilisé est le composé suivant

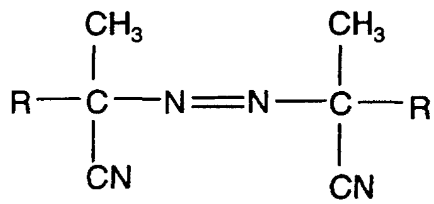

(III),

dans laquelle
R représente $CH_3$, $C_2H_5$, $C_3H_7$, $C_4H_9$ ou les radicaux isomères,

**12.** Procédé selon la revendication 11, dans lequel le composé azoïque utilisé est le composé suivant

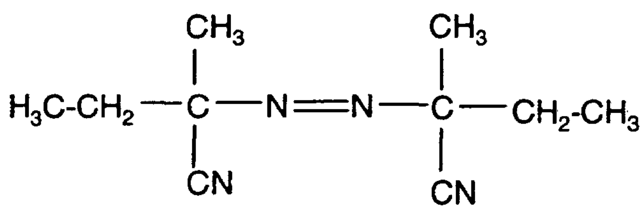

**13.** Utilisation des matières à mouler thermoplastiques selon les revendications 1 à 10 pour la fabrication de pièces moulées.

**14.** Pièces moulées fabriquées à partir de matières à mouler thermoplastiques selon les revendications 1 à 10.